# EUROPÄISCHE PATENTSCHRIFT

(11) **EP 2 789 240 B1**
(45) Veröffentlichungstag und Bekanntmachung des Hinweises auf die Patenterteilung: **09.08.2017**
(21) Anmeldenummer: 13162892.7
(22) Anmeldetag: 09.04.2013
(51) Int. Cl.: A21C 15/00

(54) **Vorrichtung zum Glasieren von Backwaren**
Device for glazing bakery products
Dispositif pour glacer des produits cuits

(43) Veröffentlichungstag der Anmeldung: 15.10.2014
(73) Patentinhaber: Schumann, Jörg, 35452 Heuchelheim (DE)
(72) Erfinder: Schumann, Jörg, 35452 Heuchelheim (DE)
(74) Vertreter: advotec.

(56) Entgegenhaltungen:
- EP-A1- 1 616 488
- DE-A1-102006 054 570
- DE-A1-102009 056 159
- DE-A1-102010 037 713
- DE-C- 514 695

## Beschreibung

Die Erfindung betrifft einen Aufsatz für ein Warmhaltegerät zur Bildung einer Vorrichtung zum Glasieren von Backwaren sowie eine Vorrichtung aufweisend einen solchen Aufsatz und ein Warmhaltegerät.

Zweck der erfindungsgemäßen Vorrichtung ist es, das Glasieren von Gebäcken aller Art mit fließfähigen essbaren Massen aller Art, wie zum Beispiel Zuckerguss oder Schokolade, auch in kleineren Backbetrieben zu vereinfachen und zu rationalisieren. Besonders bei kleineren Betriebsgrößen werden die verschiedenen Glasierarbeiten in der Regel von Hand durch Bestreichen mittels Pinsel oder durch vereinzeltes Eintauchen in die Glasurmasse bewerkstelligt, da der finanzielle Einsatz beziehungsweise die Investition in automatische Anlagen im Verhältnis zur Produktionsmenge unwirtschaftlich bleibt und/oder entsprechend große Produktionsflächen nicht zur Verfügung stehen.

Die DE 10 2010 037 713 A1 offenbart einen Aufsatz für ein Warmhaltegerät zur Bildung einer Vorrichtung zum Glasieren von Backwaren gemäß dem Oberbegriff des ersten Anspruchs. Aus der DE 42 13 296 A1 ist eine Vorrichtung bekannt, bei der eine essbare fließfähige Masse mit Hilfe von Druckluft aus einem Druckbehälter in eine Sprühpistole gedrückt wird. Über die Sprühpistole kann die fließfähige Masse auf einem Bäckereiprodukt appliziert werden. Ein Durchlauferhitzer beheizt die fließfähige Masse, bevor sie in die Sprühpistole gelangt. Dabei soll durch die Regulierung der Druckluft und der Materialmenge der fließfähigen Masse auch die Breite des Sprühstrahls eingestellt werden.

Nachteilig ist hieran, dass es bei zähen fließfähigen Massen nicht gelingt, zuverlässig einen breiten Strahl zu erzeugen. Zudem ist der Aufbau relativ aufwendig und erfordert neben einem elektrischen Anschluss auch eine externe Druckluftversorgung. Des Weiteren erfordert die Vorrichtung eine aufwendige Reinigung, wenn beispielsweise die Sprühpistole beziehungsweise die Kanäle in der Sprühpistole verstopfen, weil die fließfähige Masse verklumpt. Ferner ist der dort geschilderte Aufbau kostspielig und komplex im Aufbau.

Zwischenzeitlich kommen in kleineren Bäckereibetrieben zunehmend elektrisch beheizte Wasserbäder oder Bain-Marie-Tischgeräte als Warmhaltegeräte zum Einsatz, um eine fließfähige essbare Masse, das heißt eine Glasurmenge auf Verarbeitungstemperatur zu bringen und gegebenenfalls dort zu halten. Jedoch erfolgt das eigentliche Auftragen der Glasur immer noch manuell und ist dadurch arbeits- und lohnintensiv.

Insbesondere die optischen und qualitativen Schwankungen durch Zeitdruck oder Mitarbeiterwechsel stellen oft eine erhebliche Wertminderung der Backwaren im Ladenverkauf dar und entziehen dem Bäckerei-Handwerk in der Theken-präsentation häufig die wichtige Abgrenzung zu Industrie- oder Discountbackwaren.

Insofern besteht Bedarf an kompakten Glasiergeräten, welche einfach in Betrieb und Reinigung bei geringen Kosten und gleichbleibend hoher Qualität der Gebäcke den Arbeitsablauf rationalisieren.

Die Aufgabe der Erfindung besteht also darin, die Nachteile des Stands der Technik zu überwinden. Insbesondere soll eine Vorrichtung bereitgestellt werden, die kostengünstig ist und platzsparend aufgebaut werden kann. Zudem sollen alle oder möglichst viele verschiedene essbare fließfähige Massen, die zum Glasieren von Backwaren verwendet werden, mit der Vorrichtung auftragbar sein. Des Weiteren sollte die Vorrichtung einfach und leicht zu bedienen sein und für Störungen möglichst unempfindlich sein. Im Falle einer typischen Störung soll die Vorrichtung möglichst leicht und schnell wieder einsetzbar sein, um die Abläufe im Bäckereibetrieb möglichst wenig aufzuhalten.

Die Aufgaben der Erfindung werden gelöst durch einen Aufsatz für ein Warmhaltegerät zur Bildung einer Vorrichtung zum Glasieren von Backwaren, wobei das Warmhaltegerät einen nach oben offenen Glasurbehälter aufweist und der Aufsatz eine Pumpe, ein Förderband, eine Haltevorrichtung, mit der der Aufsatz auf dem Warmhaltegerät gehalten wird, und wenigstens einen Motor aufweist, der das Förderband antreibt, wobei eine Steigleitung mit einem Auslass und mit der Pumpe verbunden ist und derart an der Unterseite des Aufsatzes angeordnet ist, dass die Steigleitung des auf dem Warmhaltegerät angeordneten Aufsatzes in den Glasurbehälter reicht und mit der Pumpe eine fließfähige Masse aus dem Glasurbehälter durch die Steigleitung und den Auslass förderbar ist, wobei der Aufsatz derart aufgebaut ist, dass das Förderband zumindest bereichsweise waagerecht oberhalb des Glasurbehälters angeordnet ist und der Auslass oberhalb des Förderbands angeordnet ist, so dass eine fließfähige Masse, die in dem Glasurbehälter enthalten ist, durch die Steigleitung auf Gebäck, das auf dem laufenden Förderband angeordnet ist, auftragbar ist, wenn der Aufsatz mit der Haltevorrichtung auf dem Warmhaltegerät angeordnet ist.

Die an der Unterseite angeordnete Steigleitung ragt nach unten über die Haltevorrichtung hinaus, so dass die Haltevorrichtung den Aufsatz auf dem Rand des Glasurbehälters hält und die Steigleitung nach unten in den Glasurbehälter reicht, wenn der Aufsatz auf den Glasurbehälter aufgesetzt ist. Erfindungsgemäß bevorzugt wird ein Steigrohr als Steigleitung verwendet.

Die Richtungen oben und unten sind bei einem erfindungsgemäßen Aufsatz dadurch definiert, dass der Aufsatz von oben auf den Glasurbehälter aufgesetzt wird, während der Glasurbehälter so angeordnet ist, dass eine fließfähige Masse aufgrund der Gravitation in dem Glasurbehälter nicht ausläuft. Die Begriffe oben und unten können also auf die Position bezogen auf die Erdoberfläche verstanden werden, wenn die Geräte für den normalen Gebrauch aufgestellt sind.

Das Warmhaltegerät nimmt den nach oben offenen Glasurbehälter auf, wobei der Einsatz in einem Topfeinsatz des Warmhaltegeräts gehalten wird.

Bei erfindungsgemäßen Aufsätzen kann vorgesehen sein, dass das Förderband in einer Kassette angeordnet ist, die lösbar mit dem Aufsatz verbunden oder verbindbar ist, wobei vorzugsweise die Kassette über ein Haltemittel und Anschläge zu beiden Seiten der Kassette mit dem Aufsatz verbunden ist oder verbindbar ist und an der Kassette und an dem Aufsatz Zahnräder angeordnet sind, die ineinander greifen, wenn die Kassette mit dem Aufsatz verbunden ist, und über die in Eingriff gebrachten Zahnräder zumindest eine Antriebswalze für das Förderband durch den Motor oder einen der Motoren antreibbar ist.

Dabei kann wiederum vorgesehen sein, dass das Förderband mehrere voneinander beabstandete Rundriemen aufweist, auf denen das Gebäck förderbar ist und die vorzugsweise auf zumindest einer Antriebswalze und/oder zumindest einer Umlenkwalze aufgespannt sind.

Erfindungsgemäße Aufsätze können sich auch dadurch auszeichnen, dass die Pumpe eine Tauchpumpe ist, die vorzugsweise über ein Zahnrad und/oder eine Getriebewelle angetrieben wird und besonders bevorzugt von einem separaten Motor angetrieben wird.

Mit einer Weiterentwicklung der Erfindung wird vorgeschlagen, dass der Auslass höhenverstellbar an dem Aufsatz über dem Förderband in mehreren Positionen fixierbar ist, wobei vorzugsweise die Steigleitung über einen flexiblen Schlauch in den Auslass mündet und/oder der Auslass mit einer Überwurfverschraubung mit dem Aufsatz, insbesondere mit der als Steigrohr ausgebildeten Steigleitung des Aufsatzes verbunden oder verbindbar ist.

Des Weiteren kann vorgesehen sein, dass die Steigleitung oder die Pumpe an der Unterseite eine Ansaugöffnung aufweist. Dabei kann wiederum vorgesehen sein, dass die Steigleitung sich derart weit nach unten erstreckt, dass die Ansaugöffnung im Bereich des Bodens des Glasurbehälters angeordnet ist, wenn der Aufsatz auf das Warmhaltegerät aufgesetzt ist.

Auch kann vorgesehen sein, dass eine verschließbare Öffnung auf der Höhe der Pumpe in der Steigleitungswandung angeordnet ist.

Mit einer Weiterbildung der Erfindung wird vorgeschlagen, dass der Auslass eine Spaltöffnung aufweist, durch den die fließfähige Masse pressbar ist, so dass ein Schleier der fließfähigen Masse erzeugbar ist.

Ferner kann vorgesehen sein, dass der Aufsatz eine Steuerung aufweist, mit der die Förderbandgeschwindigkeit und/oder die Pumpleistung steuerbar ist/sind, wobei vorzugsweise der Aufsatz zumindest ein Eingabemittel, insbesondere zwei Stellelemente aufweist, mit der die Förderbandgeschwindigkeit und/oder die Pumpleistung einstellbar ist/sind.

Die Aufgaben der Erfindung werden auch gelöst durch eine Vorrichtung zum Glasieren von Backwaren, aufweisend einen Aufsatz nach einem der vorangehenden Ansprüche und ein Warmhaltegerät mit einem Glasurbehälter, wobei der Aufsatz bevorzugt auf dem Warmhaltegerät angeordnet, insbesondere befestigt ist, und die Steigleitung des Aufsatzes in dem Glasurbehälter des Warmhaltegeräts angeordnet ist.

Die Aufgaben der Erfindung werden erfindungsgemäß also beispielsweise gelöst durch eine Vorrichtung zum Glasieren von Backwaren, aufweisend eine Band-Pumpen-Vorrichtung zur automatischen Glasierung von Backwaren, welche durch das Einsetzten in einen wasserbewärmten und gefüllten Glasurbehälter mittels einer Tauchpumpe, vorzugsweise einer Zahnradpumpe von einem Steigrohr in dem Glasurbehälter gehalten ist, wobei die Zahnradpumpe mittels eines elektrischen Antriebs in Rotation gebracht wird, wobei die durch einen Druckkanal der Pumpe und eine durchgehende Querbohrung des angeschraubten Steigrohres aufsteigende Glasur an dessen oberen Ende über eine Schlauchverbindung zu einer vertikal verschiebbaren Haltevorrichtung, mit einem Halteelement, vorzugsweise mit einer Überwurfverschraubung, auf mittige Querposition oberhalb der separat entnehmbaren Transporteinrichtung geleitet und dort über einen Verteiler flächig fallend, insbesondere nach Art eines Wasserfalles, oder in mehrfacher Fadenform quer zur Transportrichtung ausgebracht wird.

Bei erfindungsgemäßen Vorrichtungen und Aufsätzen kann vorgesehen sein, dass eine lösbare Verbindung der Transporteinrichtung an der Antriebsleiste der Band-Pumpen-Vorrichtung vorgesehen ist, wobei durch einfaches Entnehmen oder Einsetzen der Transporteinrichtung in entsprechende Haltemittel und Anschläge zu beiden Seiten der Transporteinrichtung ein formschlüssiger Kraftfluss erzeugbar ist, der vorzugsweise über in einen Eingriff eingebrachte Zahnräder von einer Getriebewelle des Bandmotors auf eine Antriebswalze erfolgt, auf welcher mittels einer 360° Umschlingung der verwendeten Rundriemen ein nahezu schlupf-freier Umlauf über die beiden Umlenkwalzen gewährleistet wird.

Dabei kann vorgesehen sein, dass eine zuglösbare Steckerverbindung für die gemeinsam geführten Motorkabel zwischen der Band-Pumpen-Vorrichtung und der im Gehäuse des Warmhaltegerätes untergebrachten elektronischen Regelung für die Motoren der Pumpe und des Bandantriebs vorgesehen ist. Dadurch kann sichergestellt werden, dass bei Entnahme der Band-Pumpen-Vorrichtung ohne vorheriges Lösen der Steckerverbindung eine zerstörungsfreie Trennung vom Warmhaltegerät möglich ist.

Ferner kann bei erfindungsgemäßen Vorrichtungen und Aufsätzen vorgesehen sein, dass eine bodenseitige beziehungsweise nach unten gerichtete Ansaugung der Glasurpumpe bereitgestellt wird. Durch diese Maßnahme wird ein Einsaugen von Luft bei geringerem Füllstand des Glasurbehälters vermieden.

Auch kann erfindungsgemäß vorgesehen sein, dass ein lösbarer Verschluss an der Halteplatte der Glasurpumpe zum Steigrohr auf Höhe der durchgehenden Bohrung vorgesehen ist. Hierdurch wird eine sichere Entleerung und Innenreinigung dieser Bauteile ermöglicht.

Der Erfindung liegt die überraschende Erkenntnis zugrunde, dass ein erfindungsgemäßer Aufsatz beziehungsweise eine erfindungsgemäße Band-Pumpen-Einheit zur Verwendung in ohnehin häufig in Bäckereibetrieben vorhandenen Warmhaltegeräten für Glasuren eingesetzt werden kann, um eine automatisierte tischtaugliche Glasieranlage bereitzustellen.

Im Folgenden werden Ausführungsbeispiele der Erfindung anhand von drei schematisch dargestellten Figuren erläutert, ohne jedoch dabei die Erfindung zu beschränken. Dabei zeigt:
- Figur 1:: eine schematische Querschnittansicht eines erfindungsgemäßen Aufsatzes für ein Warmhaltebecken;
- Figur 2:: eine schematische Rückansicht eines erfindungsgemäßen Aufsatzes; und
- Figur 3:: eine schematische Aufsicht auf eine Kassette für ein Förderband eines erfindungsgemäßen Aufsatzes.

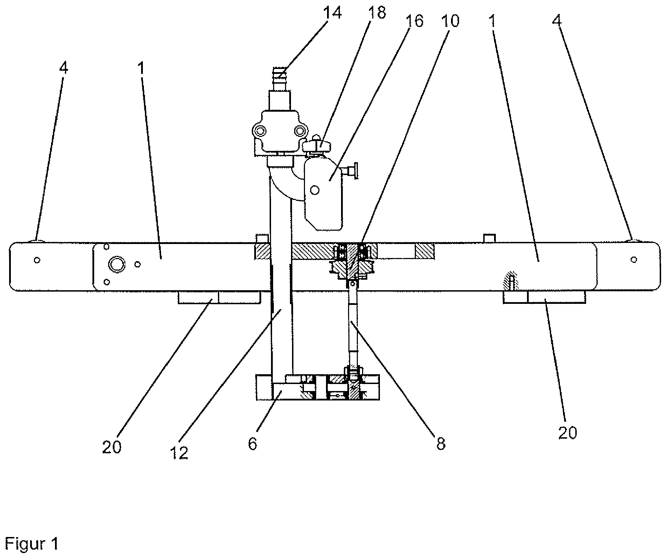

Figur 1 zeigt eine schematische Querschnittansicht eines erfindungsgemäßen Aufsatzes für ein Warmhaltebecken. Die mit dem Warmhaltebecken und dem als Band-Pumpen-Einheit gebildeten Aufsatz gebildete Vorrichtung zum Glasieren von Gebäck oder Backwaren (nicht gezeigt) beziehungsweise das so gebildete Glasiergerät zum Glasieren von Gebäck oder Backwaren benötigt keine zusätzliche Stellfläche, wenn ein solches Warmhaltebecken ohnehin schon in dem Betrieb vorhanden ist.

Insofern kann ein branchenübliches Warmhaltegerät (beheizte Wasserbäder), auch als Bain-Marie bekannt, mittels der erfindungsgemäßen Vorrichtung zu einer automatisierten tischtauglichen Glasieranlage ergänzt werden, welche den der Erfindung zugrundeliegenden aufgabengemäßen Kriterien Rechnung trägt.

Figur 1 zeigt also eine Band-Pumpen-vorrichtung zur Förderung und Zirkulation einer temperierten Glasurmasse (nicht gezeigt) über eine darunter laufende Förderband-Kassette 1 als Transporteinrichtung 1, die ein Förderband (nicht gezeigt) aufweist, das über Walzen 4 läuft. Als Förderband werden voneinander beabstandete Rundriemen in Rillen der Walzen 4 gespannt, so dass nicht auf dem Gebäck haftende Glasurmasse zwischen den Rundriemen hindurch in einen Glasurbehälter (nicht gezeigt) eines Warmhaltegeräts zurückfließen kann. Eine Pumpe 6 ist an der Unterseite des Aufsatzes angeordnet und taucht bei aufgesetztem Aufsatz in die Glasur ein. Die Pumpe 6 wird über eine Welle 8 von einem Motor 10 angetrieben.

Die Transporteinrichtung 1 wird auf der Oberkante des wassererwärmten Glasurbehälters aufgelegt, so dass die durch den Pump-Betrieb geförderte Glasur quer zur Transportrichtung des Gebäcks flächig, nach Art eines Wasserfalles oder als mehrfacher Faden, zwischen den Rundriemen der Transporteinrichtung 1 in den Glasurbehälter zurückfließt. Die Transporteinrichtung 1 dient dabei als Haltevorrichtung des Aufsatzes, da sie das Gewicht des Aufsatzes trägt.

Die Pumpe 6 ist mit einem Steigrohr 12 verbunden, durch das die Glasur aus dem Glasurbehälter nach oben gepumpt wird. Das Steigrohr 12 ist über einen flexiblen Schlauch 14 mit einem vertikal höhenverstellbaren Stell-Kipp-Schleier 16 verbunden, der einen horizontal waagerechten spaltförmigen Auslass (in Figur 1 nicht zu erkennen) aufweist. Die Spaltbreite des Auslasses kann über eine Stellschraube 18 am Stell-Kipp-Schleier 16 eingestellt werden.

Die Glasur wird bei auf einem Warmhaltegerät aufgesetztem Aufsatz aus dem Glasurbehälter mit der Pumpe 6 nach oben durch das Steigrohr 12 und den flexiblen Schlauch 14 gepumpt und dort durch den Auslass im Kipp-Stell-Schleier 16 herausgedrückt. Die Glasur bildet dabei einen Schleier, der über und zwischen den Rundriemen der Transporteinrichtung 1 hindurch in den Glasurbehälter zurück fließt.

Unter der Transporteinrichtung 1 kann ein Sieb (nicht gezeigt) angeordnet sein, um größere Kuchen- beziehungsweise Gebäckstücke zurückzuhalten. Die erwärmte Glasur aus dem Glasurbehälter zirkuliert dadurch weitgehend verlustfrei, bis Gebäck beziehungsweise Backwaren (nicht gezeigt) auf die Transporteinrichtung 1 aufgelegt werden. Die Backwaren beziehungsweise das Gebäck wird mit einer eingestellten Bandgeschwindigkeit durch den geregelten Glasurfluss gefahren und unter dem Auslass mit Glasur überzogen.

Die aufgetragene Glasurmenge pro Gebäck entsteht aus der Relation von Durchflussmenge, die durch die Pumpenleistung eingestellt wird, zur Bandgeschwindigkeit und ist über zwei vorzugsweise voneinander getrennte Regelungen (nicht gezeigt) der Antriebe frei wählbar und bleibt ohne Änderung der Parameter konstant.

Auf der Unterseite der Transporteinrichtung 1 sind zwei Halbschalen 20 angeordnet, die abtropfende Glasur von den Rundriemen und dem Gebäck in Richtung Mitte in den Glasurbehälter leiten sollen.

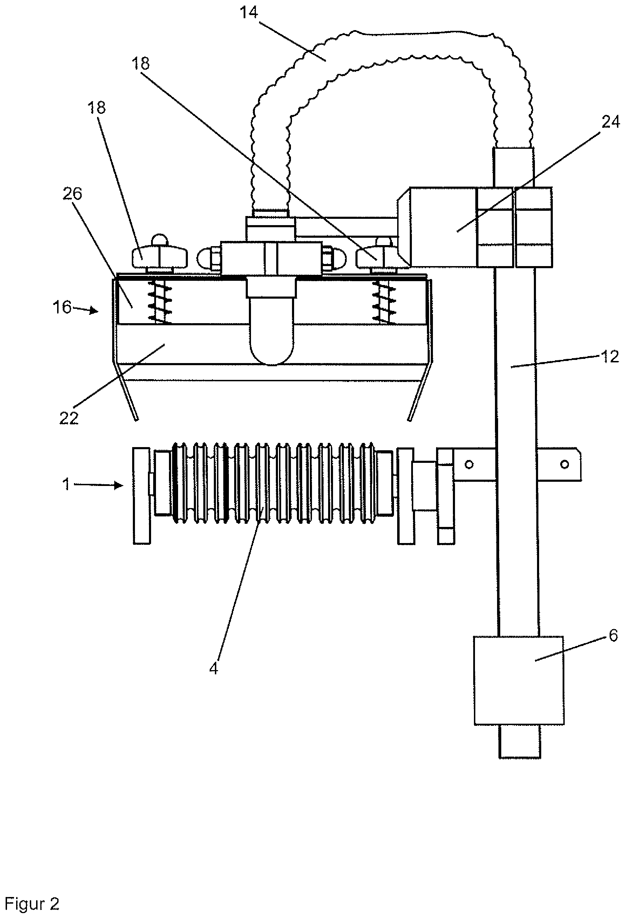

Figur 2 zeigt eine schematische Rückansicht eines erfindungsgemäßen Aufsatzes. Der Einfachheit halber werden in Figur 2 die gleichen Bezugszeichen für die gleichen Bauteile verwendet.

Der Aufsatz hat eine Fördereinrichtung 1, in der eine Antriebswalze und eine Umlenkwalze 4 drehbar gelagert sind. Jede der Walzen 4 weist eine Vielzahl von Rillen für Rundriemen (nicht gezeigt) auf, die in den Rillen nach Art einer 360°-Umschlingung eingespannt sind. Anstatt einer 360°-Umschlingung können die Rundriemen auch in anderer Weise aufgespannt werden. Die Rundriemen sollen ein Förderband der Fördereinrichtung 1 bilden. Die Fördereinrichtung 1 ist lösbar als Kassette mit dem restlichen Aufsatz verbunden. Die äußeren Bereiche der Kassette der Fördereinrichtung 1 liegen auf dem Rand eines Glasurbehälters einer Warmhalteeinrichtung auf, wenn der Aufsatz zum bestimmungsgemäßen Gebrauch auf der Warmhalteeinrichtung zur Bildung eines Glasiergeräts aufgelegt oder befestigt ist. Wenn ein besserer Halt des Aufsatzes auf der Warmhalteeinrichtung gewünscht ist, kann eine Rastvorrichtung, eine Verschraubung oder ein anderer Haltemechanismus an der Kassette der Fördereinrichtung 1 vorgesehen sein, über die die Kassette und damit der Aufsatz fest mit der Warmhalteeinrichtung verbunden sein kann.

Die Fördereinrichtung 1 ist mit einer Steigleitung 12 verbunden, an deren unteren Ende eine Tauchpumpe 6 angeordnet ist, mit der Glasur nach oben durch die Steigleitung 12 pumpbar ist. An der Oberseite der Steigleitung 12 ist ein flexibler Schlauch 14 mit der Steigleitung 12 verbunden, mit dem die flüssige Glasur zu einem zur Rückseite hin geschlossenen Kasten 22 geleitet wird. Die Pumpleistung der Pumpe 6 ist über eine Stellschraube (nicht gezeigt) einstellbar.

An der Vorderseite des Kastens 22 ist eine Winkelblende 26 angeordnet, die über den Kasten 22 hinausragt und die an der Vorderseite des Kastens 22 unten einen Spalt frei lässt. Dieser Spalt dient als Auslass für den Aufsatz. Die fließfähige Glasur strömt durch den Kasten 22 und aus dem Auslass heraus und bildet dabei einen Glasurschleier. Die Breite des Spalts des Auslasses ist einstellbar, da die Winkelblende 26 verschiebbar mit dem Kasten 22 verbunden ist. Zwei Stellschrauben 18 dienen dazu, die Position der Winkelblende 26 gegenüber dem Kasten 22 festzulegen und somit die Spaltbreite des Auslasses einzustellen.

Die gesamte Stell-Kipp-Schleier-Vorrichtung 20 ist mit einer höhenverstellbaren Halterung 24 mit der Steigleitung 12 verbunden und dadurch an der Steigleitung 12 gehalten.

Ein Gebäck, das auf dem Förderband gefördert wird, wird durch den Glasurschleier transportiert und mit Glasur überzogen. Die überschüssige Glasur läuft zwischen den Rundriemen des Förderbands hindurch und kann zurück in den Glasurbehälter fließen.

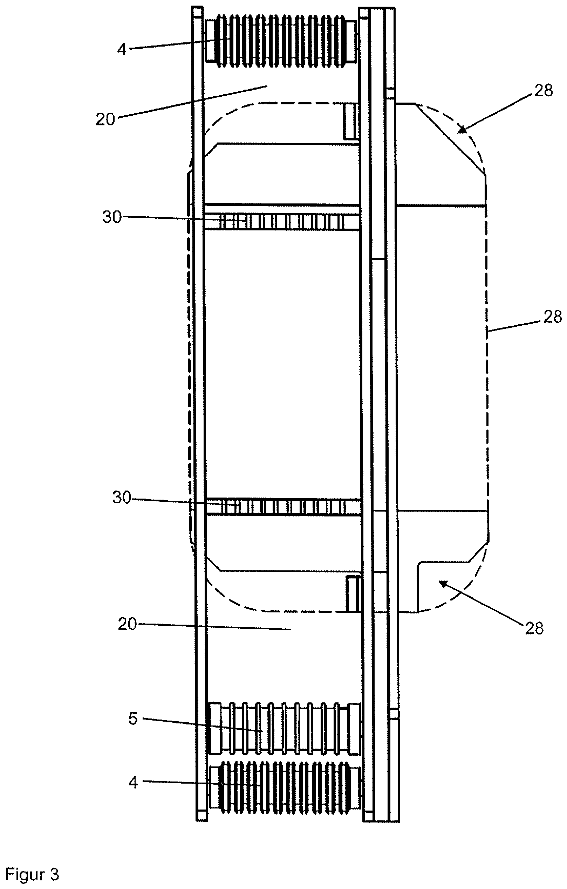

Figur 3 zeigt eine schematische Aufsicht auf eine Kassette für ein Förderband (nicht gezeigt) eines erfindungsgemäßen Aufsatzes, der auf einem Glasurbehälter 28, der in Figur 3 durch eine gestrichelte Linie angedeutet ist, aufgesetzt ist.

Die Kassette weist zwei Umlenkwalzen 4, eine Antriebswalze 5 und zwei Stützwalzen 30 auf, die alle umlaufende Vertiefungen zur Aufnahme von mehreren voneinander beabstandeten Rundriemen (nicht gezeigt) aufweisen. Die Rundriemen bilden das Förderband, wenn sie um die Walzen 4, 5, 30 herum beziehungsweise auf die Walzen 4, 5, 30 aufgespannt sind.

An der Unterseite der Kassette sind zwei Halbschalen 20 angeordnet, die bis über den Rand des Glasurbehälters 28 ragen. In Figur 3 ist zu sehen, wie die Kassette des Aufsatzes auf den Rand des Glasurbehälters 28 gelegt wird. Abtropfende Glasur vom Gebäck und den Rundriemen kann direkt oder über die Halbschalen 20 in den Glasurbehälter zurückfließen.

Die Antriebswalze 5 kann über Zahnräder (nicht gezeigt) mit einem steuerbaren Elektromotor des Aufsatzes verbunden werden. So ist die Fördergeschwindigkeit des Förderbands einstellbar.

Die in der voranstehenden Beschreibung sowie den Ansprüchen, Figuren und Ausführungsbeispielen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Aufsatz für ein Warmhaltegerät zur Bildung einer Vorrichtung zum Glasieren von Backwaren, wobei das Warmhaltegerät einen nach oben offenen Glasurbehälter (28) aufweist und der Aufsatz ein Förderband, eine Haltevorrichtung, mit der der Aufsatz auf dem Warmhaltegerät gehalten wird, und wenigstens einen Motor aufweist, der das Förderband antreibt, **dadurch gekennzeichnet, dass** der Aufsatz eine Pumpe (6) und eine Steigleitung (12) mit einem Auslass aufweist, wobei der Auslass mit der Pumpe (6) verbunden ist und die Steigleitung (12) derart an der Unterseite des Aufsatzes angeordnet ist, dass die Steigleitung (12) des auf dem Warmhaltegerät angeordneten Aufsatzes in den Glasurbehälter (28) reicht und mit der Pumpe (6) eine fließfähige Masse aus dem Glasurbehälter (28) durch die Steigleitung (12) und den Auslass förderbar ist, wobei der Aufsatz derart aufgebaut ist, dass das Förderband zumindest bereichsweise waagerecht oberhalb des Glasurbehälters (28) angeordnet ist und der Auslass oberhalb des Förderbands angeordnet ist, so dass eine fließfähige Masse, die in dem Glasurbehälter (28) enthalten ist, durch die Steigleitung (12) auf Gebäck, das auf dem laufenden Förderband angeordnet ist, auftragbar ist, wenn der Aufsatz mit der Haltevorrichtung auf dem Warmhaltegerät angeordnet ist.

2. Aufsatz nach Anspruch 1,
dadurchgekennzeichnet,
dass das Förderband in einer Kassette (1) angeordnet ist, die lösbar mit dem Aufsatz verbunden oder verbindbar ist, wobei vorzugsweise die Kassette (1) über ein Haltemittel und Anschläge zu beiden Seiten der Kassette (1) mit dem Aufsatz verbunden ist oder verbindbar ist und an der Kassette (1) und an dem Aufsatz Zahnräder angeordnet sind, die ineinander greifen, wenn die Kassette (1) mit dem Aufsatz verbunden ist, und wobei über die in Eingriff gebrachten Zahnräder zumindest eine Antriebswalze (5) für das Förderband durch den Motor (10) oder einen der Motoren antreibbar ist.

3. Aufsatz nach Anspruch 2,
dadurchgekennzeichnet,
dass das Förderband mehrere voneinander beabstandete Rundriemen aufweist, auf denen das Gebäck förderbar ist und die vorzugsweise auf zumindest eine Antriebswalze (5) und/oder zumindest eine Umlenkwalze (4) aufgespannt sind.

4. Aufsatz nach einem der vorangehenden Ansprüche,
dadurchgekennzeichnet,
dass die Pumpe (6) eine Tauchpumpe (6) ist, die vorzugsweise über ein Zahnrad und/oder eine Getriebewelle (8) angetrieben wird und besonders bevorzugt von einem separaten Motor (10) angetrieben wird.

5. Aufsatz nach einem der vorangehenden Ansprüche,
dadurchgekennzeichnet,
dass der Auslass höhenverstellbar an dem Aufsatz über dem Förderband in mehreren Positionen fixierbar ist, wobei vorzugsweise die Steigleitung (12) über einen flexiblen Schlauch (14) in den Auslass mündet und/oder der Auslass mit einer Überwurfverschraubung (24) mit dem Aufsatz, insbesondere mit der als Steigrohr (12) ausgebildeten Steigleitung (12) des Aufsatzes, verbunden oder verbindbar ist.

6. Aufsatz nach einem der vorangehenden Ansprüche,
dadurchgekennzeichnet,
dass die Steigleitung (12) oder die Pumpe (6) an der Unterseite eine Ansaugöffnung aufweist, wobei die Steigleitung (12) sich derart weit nach unten erstreckt, dass die Ansaugöffnung im Bereich des Bodens des Glasurbehälters (28) angeordnet ist, wenn der Aufsatz auf das Warmhaltegerät aufgesetzt ist.

7. Aufsatz nach einem der vorangehenden Ansprüche,
dadurchgekennzeichnet,
dass eine verschließbare Öffnung auf der Höhe der Pumpe (6) in der Steigleitungswandung angeordnet ist.

8. Aufsatz nach einem der vorangehenden Ansprüche,
dadurchgekennzeichnet,
dass der Auslass eine Spaltöffnung aufweist, durch den die fließfähige Masse pressbar ist, so dass ein Schleier der fließfähigen Masse erzeugbar ist.

9. Aufsatz nach einem der vorangehenden Ansprüche,
dadurchgekennzeichnet,
dass der Aufsatz eine Steuerung aufweist, mit der die Förderbandgeschwindigkeit und/oder die Pumpleistung steuerbar ist/sind, wobei vorzugsweise der Aufsatz zumindest ein Eingabemittel, insbesondere zwei Stellelemente aufweist, mit der die Förderbandgeschwindigkeit und/oder die Pumpleistung einstellbar ist/sind.

10. Vorrichtung zum Glasieren von Backwaren, aufweisend einen Aufsatz nach einem der vorangehenden Ansprüche und ein Warmhaltegerät mit einem Glasurbehälter (28), wobei der Aufsatz bevorzugt auf dem Warmhaltegerät angeordnet, insbesondere befestigt ist, und die Steigleitung (12) des Aufsatzes in dem Glasurbehälter (28) des Warmhaltegeräts angeordnet ist.

## Claims

1. An attachment for a warming dish for forming a device for glazing pastries, said warming dish comprising a glazing container (28) open to the top and said attachment comprising a conveyor belt, a holding device, with which the attachment is held onto the warming dish, and at least one motor, which drives the conveyor belt,
**characterized in that**
the attachment comprises a pump (6) and a rising pipe (12) having an outlet, said outlet being connected to the pump (6) and said rising pipe (12) being arranged at the lower side of the attachment such that the rising pipe (12) of the attachment arranged on the warming dish reaches into the glazing container (28) and a pourable mass being able to be conveyed from the glazing container (28) via the rising pipe (12) and the outlet using the pump (6), said attachment being designed such that the conveyor belt is at least partially arranged horizontally above the glazing container (28) and the outlet is arranged above the conveyor belt so that a pourable mass, which is contained in the glazing container (28), can be applied to baked goods, which are arranged on the running conveyor belt, via the rising pipe (12) when the attachment is arranged on the warming dish by means of the holding device.

2. The attachment according to claim 1,
**characterized in that**
the conveyor belt is arranged in a frame (1), which is connected or can be connected to the attachment in a detachable manner, said frame (1) preferably being connected or being able to be connected to the attachment via holding means and abutments on both sides of the frame (1), and gear wheels, which engage with each other, being arranged at the frame (1) and the attachment when the frame (1) is connected to the attachment, and a driving roll (5) for the conveyor belt being able to be driven by the motor (10) or one of the motors via the gear wheels, which have been engaged with each other.

3. The attachment according to claim 2,
**characterized in that**
the conveyor belt comprises several round belts, which are distanced to one another and on which the baked goods can be conveyed and which are preferably spanned on at least one driving roll (5) and/or at least one deflecting roll (4).

4. The attachment according to any one of the preceding claims,
**characterized in that**
the pump (6) is a submersible pump (6), which can be preferably driven via a gear wheel and/or a gear shaft (8) and is particularly preferably driven by a separate motor (10).

5. The attachment according to any one of the preceding claims,
**characterized in that**
the outlet can be secured to the attachment in several positions via the conveyor belt in a height adjustable manner, the rising pipe (12) preferably flowing into the outlet via a flexible hose (14) and/or the outlet being connected or being able to be connected to the attachment, in particular to the rising pipe (12) of the attachment formed as a rising tube (12), by means of a male fitting for pipes (24).

6. The attachment according to any one of the preceding claims,
**characterized in that**
the rising pipe (12) or the pump (6) comprises a suction opening at the lower side, said rising pipe (12) extending so far down that the suction opening is arranged in the area of the bottom of the glazing container (28) when the attachment is attached onto the warming dish.

7. The attachment according to any one of the preceding claims,
**characterized in that**
a closable opening is arranged in the rising-pipe wall at the height of the pump (6).

8. The attachment according to any one of the preceding claims,
**characterized in that**
the outlet comprises a gap opening, through which the pourable mass can be pushed so that a screen of the pourable mass can be produced.

9. The attachment according to any one of the preceding claims,
**characterized in that**
the attachment comprises a controlling, by means of which the speed of the conveyor belt and/or the pump performance can be controlled, said attachment preferably comprising at least one input means, in particular two actuators, the speed of the conveyor belt and/or the pump performance being able to be controlled by means of said input means.

10. A device for glazing pastries, comprising an attachment according to any one of the preceding claims and a warming dish having a glazing container (28), said attachment preferably being arranged on, in particular secured to, the warming dish and the rising pipe (12) of the attachment being arranged in the glazing container (28) of the warming dish.

## Revendications

1. Accessoire pour un dispositif de chauffage pour former un dispositif pour glacer des produits de boulangerie, ledit dispositif de chauffage comprenant une cuve de glaçage (28) ouverte vers le haut et ledit accessoire comprenant un convoyeur à courroie, un dispositif de maintien, au moyen duquel l'accessoire est maintenu sur le dispositif de chauffage, et au moins un moteur, qui entraîne le convoyeur à courroie,
**caractérisé en ce que**
l'accessoire comprend une pompe (6) et une colonne montante (12) ayant une sortie, ladite sortie étant reliée à la pompe (6) et ladite colonne montante (12) étant disposée au côté inférieur de l'accessoire de telle manière que la colonne montante (12) de l'accessoire disposé sur le dispositif de chauffage atteint dans la cuve de glaçage (28) et une masse fluide pouvant être convoyée de la cuve de glaçage (28) par la colonne montante (12) et la sortie en utilisant la pompe (6), ledit accessoire étant conçu de telle manière que le convoyeur à courroie est disposé au moins partiellement horizontalement au-dessus de la cuve de glaçage (28) et la sortie est disposée au-dessus du convoyeur à courroie de manière à ce qu'une masse fluide, qui est contenu dans la cuve de glaçage (28), puisse être appliquée sur la pâtisserie, qui est disposée sur le convoyeur à courroie courant, par la colonne montante (12) quand l'accessoire est disposé sur le dispositif de chauffage au moyen du dispositif de maintien.

2. Accessoire selon la revendication 1,
**caractérisé en ce que**
le convoyeur à courroie est disposé dans un cadre (1), qui est relié ou peut être relié à l'accessoire dans une manière détachable, ledit cadre (1) étant relié ou pouvant être relié à l'accessoire préférablement par un moyen de maintien et des butées sur les deux côtés du cadre (1) et des roues dentées, qui s'engagent les unes avec les autres, étant disposées au cadre (1) et à l'accessoire quand le cadre (1) est relié à l'accessoire et un rouleau d'entraînement (5) pour le convoyeur à courroie pouvant être entraîné par le moteur (10) ou un des moteurs par les roues dentées, qui sont engagées les unes avec les autres.

3. Accessoire selon la revendication 2,
**caractérisé en ce que**
le convoyeur à courroie comprend plusieurs courroies rondes, qui sont espacées les unes aux autres et sur lesquelles la pâtisserie peut être convoyée et qui sont préférablement montées sur au moins un rouleau d'entraînement (5) et/ou au moins un rouleau de déviation (4).

4. Accessoire selon l'une quelconque des revendications précédentes,
**caractérisé en ce que**
la pompe (6) est une pompe submersible (6), qui peut être entraînée préférablement par une roue dentée et/ou un arbre de boîte de vitesse (8) et est entraînée plus préférablement par un moteur (10) séparé.

5. Accessoire selon l'une quelconque des revendications précédentes,
**caractérisé en ce que**
la sortie peut être fixée à l'accessoire par le convoyeur à courroie en plusieurs positions avec une hauteur réglable, la colonne montante (12) s'écoulant préférablement dans la sortie par un tuyau flexible (14) et/ou la sortie étant reliée ou pouvant être reliée à l'accessoire, en particulier à la colonne montante (12) formée en tant que conduit montant (12) de l'accessoire, au moyen d'un écrou de tuyau (24).

6. Accessoire selon l'une quelconque des revendications précédentes,
**caractérisé en ce que**
la colonne montante (12) ou la pompe (6) comprend une orifice d'aspiration au côté inférieur, ladite colonne montante (12) s'étendant vers le bas de manière à ce que l'orifice d'aspiration soit disposée dans la zone du fond de la cuve de glaçage (28) quand l'accessoire est relié sur le dispositif de chauffage.

7. Accessoire selon l'une quelconque des revendications précédentes,
**caractérisé en ce qu'**
une orifice qui peut être fermée est disposée dans le paroi de la colonne montante (12) à l'hauteur de la pompe (6).

8. Accessoire selon l'une quelconque des revendications précédentes,
**caractérisé en ce que**
la sortie comprend une orifice de fente, par laquelle la masse fluide peut être passée de manière à ce qu'un écran de la masse fluide puisse être produit.

9. Accessoire selon l'une quelconque des revendications précédentes,
**caractérisé en ce que**
l'accessoire comprend un régulateur, au moyen duquel la vitesse du convoyeur à courroie et/ou la performance de la pompe peut/peuvent être régulée(s), ledit accessoire comprenant préférablement au moins un moyen d'entrée, en particulier deux actuateurs, au moyen duquel la vitesse du convoyeur à courroie et/ou la performance de la pompe peut/peuvent être régulée(s).

10. Dispositif pour glacer des produits de boulangerie, comprenant un accessoire selon l'une quelconque des revendications précédentes et un dispositif de chauffage ayant une cuve de glaçage (28), ledit accessoire étant disposé préférablement sur le, en particulier fixé au, dispositif de chauffage et la colonne montante (12) de l'accessoire étant disposée dans la cuve de glaçage (28) du dispositif de chauffage.
